# EUROPEAN PATENT APPLICATION

(11) **EP 1 555 084 A1**
(43) Date of publication of application: **20.07.2005**
(21) Application number: 04075022.6
(22) Date of filing: 13.01.2004
(51) Int. Cl.: B23Q 1/25, B23Q 3/06, B25B 5/00

(54) **Machine tool with longitudinally slidable clamps with own driving means**

(71) Applicant: Mubea Systems, Société Anonyme, 7700 Mouscron (BE)
(72) Inventor: Havegeer, Franky Gaston, 8800 Oekene Roeselare (BE)
(74) Representative: Donné, Eddy

(57) **Abstract**

Improved device for machining parts which is essentially composed of a machining apparatus (5) with at least one working tool positioned alongside a longitudinal frame (2), one or more clamps (3) with at least two claws (18-19) for clamping the parts (4) to be machined, which clamps (3) are provided in a slidable manner on guides (11) mounted on said frame (2) following the longitudinal direction of this frame (2), whereby at least one claw (19) of each clamp (3) is provided on a slide (20) which is mounted on guides (31) extending in a direction transversal to the longitudinal direction of the frame (2) and whereby this slide (20) is provided with pressure means (22) to clamp the concerned parts (4), characterised in that one or more clamps (3) are provided with their own driving means (12) to move said clamp (3) in the longitudinal direction of the frame (2).

## Description

The present invention concerns an improved device for machining and finishing parts, more specifically for milling, drilling, tapping, punching and sawing a variety of parts like for example profiles in metal, non-ferro and other heat-resistant materials, such as PVC.

Such devices for machining parts are up to now essentially composed of a machining apparatus with at least one working tool positioned alongside a longitudinal frame, one or more clamps with at least two claws for clamping the parts to be machined, which clamps are provided in a slidable manner on guides mounted on said frame following the longitudinal direction of this frame, whereby at least one claw of each clamp is provided on a slide which is mounted on guides extending in a direction transversal to the longitudinal direction of the frame and whereby this slide is provided with pressure means to clamp the concerned part.

Prior to clamping the part to be machined, the clamps are moved to their respective desired positions along the frame.

The clamps are actually moved along the longitudinal direction of the frame, either manually by the operator of the device, either automatically by an outside positioning system which can move the clamps individually one at the time.

A disadvantage of the existing devices is that the positioning of the clamps take up a lot of production time since the clamps have to be moved one by one, hence limiting the production capacity of the device.

Another disadvantage is that with such a known device the parts have to be prepared and machined in a successive manner and that such a device does not allow to already prepare the next part to be machined before the previous part has completely been machined and has been removed from the device.

Yet another disadvantage is that for the machining of parts with different width, clamps are needed with different clamping width. Indeed, in order to avoid that fingers are caught between the clamps and the part to be machined, clamps must be chosen with a maximum clamping width which is slightly larger than the width of the concerned part at the spot of clamping.

The invention aims an improved device for machining parts which remedies one or more of the above mentioned disadvantages.

This aim is reached according to the invention in that one or more, preferably all, of the clamps of a device of the type as previously described, are provided with their own driving means to move said clamps in the longitudinal direction of the frame.

In this way the clamps can simultaneously be moved on an individual basis, each to their respective desired clamping spots.

An advantage is that the clamps can be moved simultaneously without the need to wait until a previous clamp has been positioned correctly. This means that valuable production time can be spared and that for this reason the production capacity can drastically be improved.

Another advantage is that the clamps can also be moved simultaneously in a synchronised manner, so that when all the clamps which hold a particular part, are activated in such a synchronised way, the concerned part can be moved on the frame, for instance out of the working area towards a first preparation area on one side of the frame, so that the working area is cleared for machining the next part which in the meanwhile has been prepared in a second preparation area on the other side of the frame and which can be moved to the working area in a similar way by simultaneously activating the clamps which are holding said part. This means that the production capacity of the device is even more improved with respect to the known devices.

Following a preferred embodiment, the device is provided with means to adapt the maximum clamping width of the clamp, so that the same clamp can be used for clamping parts with different sizes.

In order to better explain the characteristics of the invention, the following preferred embodiment of an improved device for machining construction parts according to the invention is described as an example only without being limitative in any way, with reference to the accompanying drawings, in which:
figure 1 represents a view in perspective of an improved device according to the invention;
figure 2 represents on a larger scale the part that in figure 1 is indicated by F2;
figure 3 represents a transversal section following line III-III in figure 2;
figure 4 represents a cross section following line IV-IV in figure 3;
figures 5 to 7 represent different views similar to the view of figure 3, but for different positions.

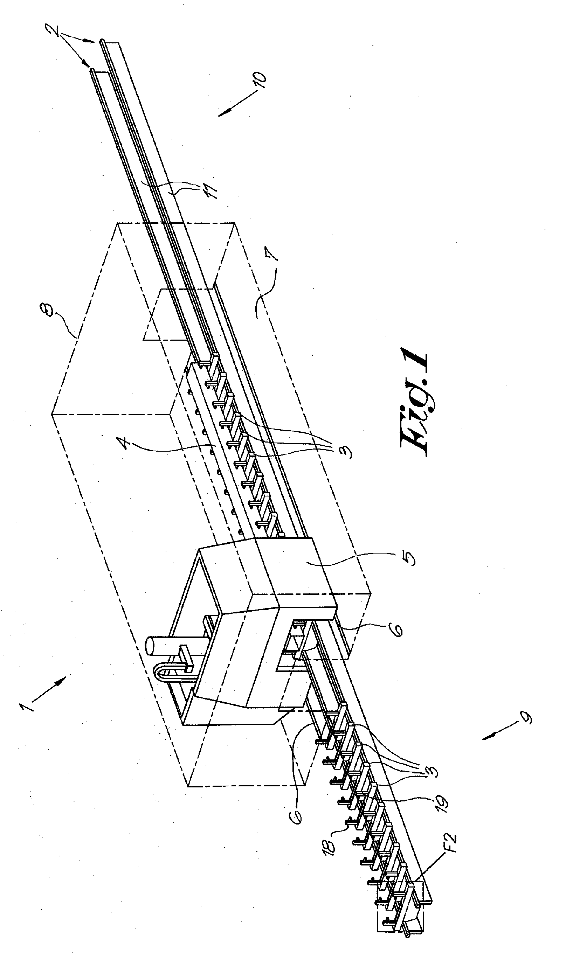

The improved device 1 for machining parts according to the invention, as represented in figure 1, is essentially composed of a longitudinal frame 2 with a plurality of clamps 3 for clamping a construction part 4 to be machined.

A machining apparatus 5 with one or more working tools like drills, taps, punches or the like is positioned alongside the frame 2 and is in this case mounted on tracks 6 which are parallel to the frame 2 and which extend over the length of a central working area 7 which is limited by a fence 8 or the like and which also separates a first preparation area 9 on one end of the frame 2 from a second preparation area 10 on the opposite end of the frame 2.

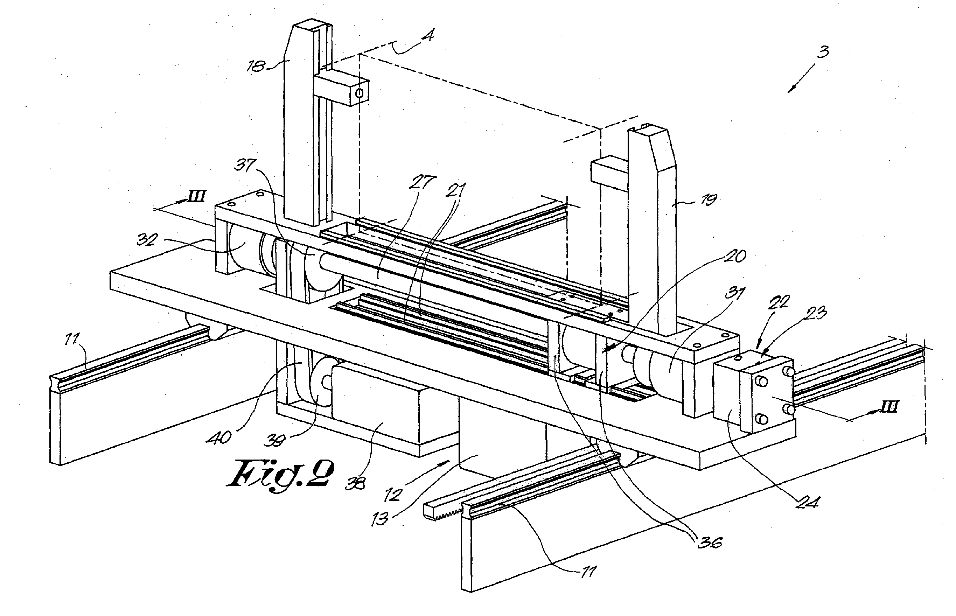

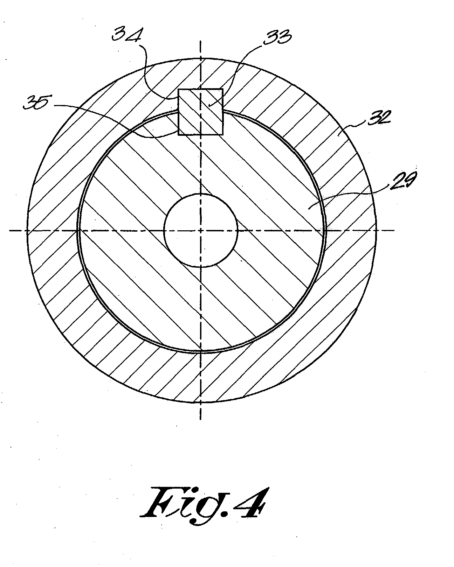

As is in detail represented in figures 2 to 4, each clamp 3 is mounted in a slidable manner on guides 11 mounted on said frame 2 following the longitudinal direction of this frame 2.

Each clamp 3 is according to the invention equipped with its own driving means 12 to move said clamp 3 in the longitudinal direction of the frame 2, whereby these driving means 12 are formed by a motor 13 which is fitted onto said clamp 3 and by a gear 14 which is fixed on the shaft 15 of the motor 13 and which meshes up with a fixed gear lath 16 which extends in the longitudinal direction of the frame 2 and which is secured to the frame 2 by means of a support 17.

Each clamp 3 possesses two claws, respectively a first claw 18 which is fixed on the clamp 3, and a second claw 19 which is provided on a slide 20 which is slidably mounted on guides 21 extending in a direction transversal to the longitudinal direction of the frame 2.

The slide 20 is provided with pressure means 22 to clamp a part 4 to be machined, whereby these pressure means 22 are in this case formed by a pneumatic or hydraulic cylinder 23 fixed with its body 24 to the clamp 3 and provided with a piston 25 and a protruding cylinder rod 26 which is fixed to a pressure rod 27 extending parallel to the above mentioned guides 21, this pressure rod 27 being connected to the slide 20 of the slidable claw 19.

The pressure rod 27 is ratatably supported with each of its extremities in a sleeve 28, 29 respectively, by means of bearings 30, whereby both sleeves 28 and 29 are slidably mounted in concentric bushes 31 and 32 fixed on the clamp 3.

The sleeves 28 and 29 are provided with means to prevent them from turning in said bushes 31 and 32, whereby these means are formed by a bar 33 which is mounted in between the sleeves 28-29 and the bushes 31-32, more particularly in axially extending grooves 34 in the sleeves 28-29 and in axially extending grooves 35 in the bushes 30-31.

The pressure rod 27 of the clamp 3 is a threaded rod which extends through threaded holes 36 in the slide 20 of the slidably mounted claw 19 and whereby this threaded rod is provided with driving means which in this case are formed by a first pulley 37 fixed on said rod 27; by a motor 38 which is fixed with its housing on one of the supporting sleeves 29 and which carries a second pulley 39; and by a belt 40 which is mounted on both pulleys 37-39.

These driving means in fact form, together with the threaded pressure rod 27 and the slide 20, additional means to change the maximum clamping width of the clamp 3, in other words the maximum opening distance of the claws 18-19.

Preferably the improved device according to the invention is provided with a central control unit which is not shown in the drawing and which is meant for control of the driving means 12 of said clamps, as well as of the pressure means 22 and of the means to change the maximum clamping width of each clamp 3.

This control unit is such that it allows for individual control of each of the clamps 3 and that it allows for simultaneous and synchronised control of two or more, preferably of all of said clamps.

The functioning and the use of the improved device according to the invention is quite simple and as follows.

In figure 1 a situation is represented whereby a part 4 to be machined is positioned in the working area 7 and is fixed in position on the frame 2 by means of a plurality of clamps 3.

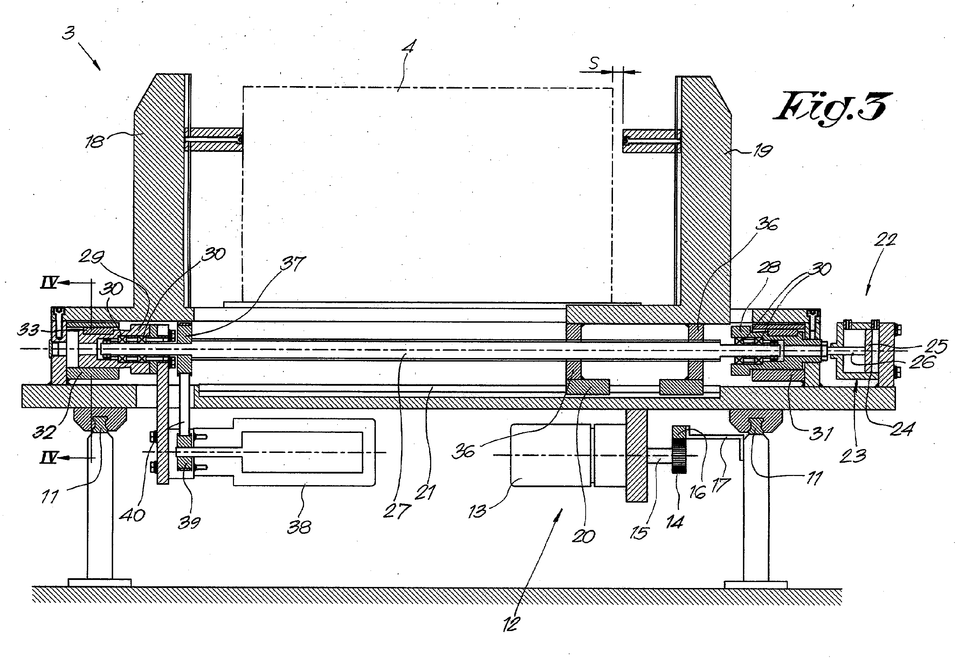

The part 4 is clamped in between the claws 18-19 of each clamp 3 by first actuating the motor 38 in order to rotate the threaded rod 27 and to move the slide 20 with the claw 19 into a position as indicated in figure 3, in order to adapt the maximum clamping width of the clamp in such a way that the clearance S between the part 4 and the claws 18-19 is less than a predetermined value, which preferably is less then the thickness of a finger, so that the danger of fingers getting caught between the part 4 and the clamp 3 is minimised.

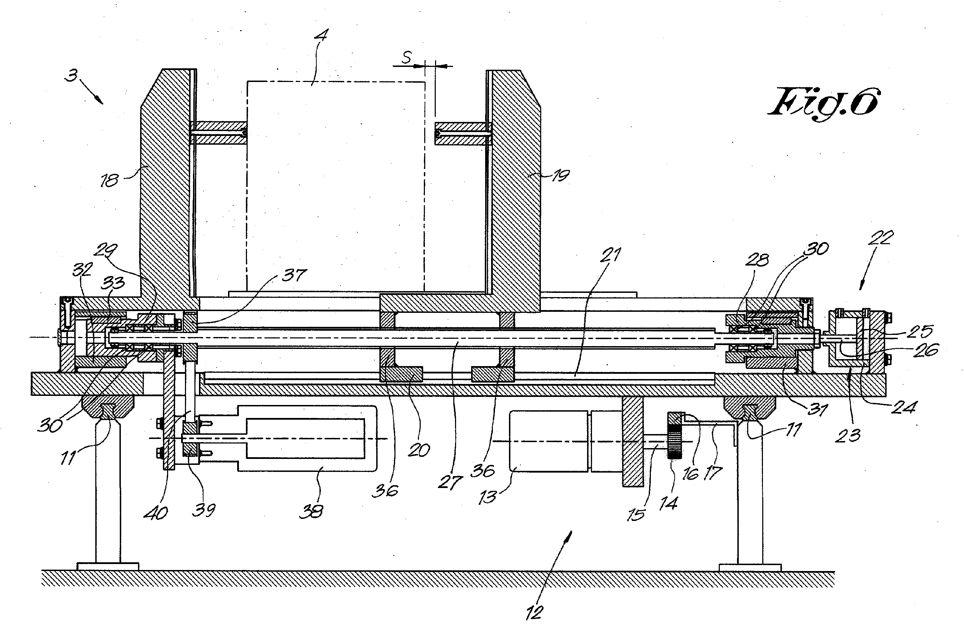

At places where the cross section of part 4 is smaller, like for example in the case of figure 6, the maximum clamping width between the claws 18-19 can be reduced by actuating the motor 38, thereby further approaching the claws 18-19 to each other.

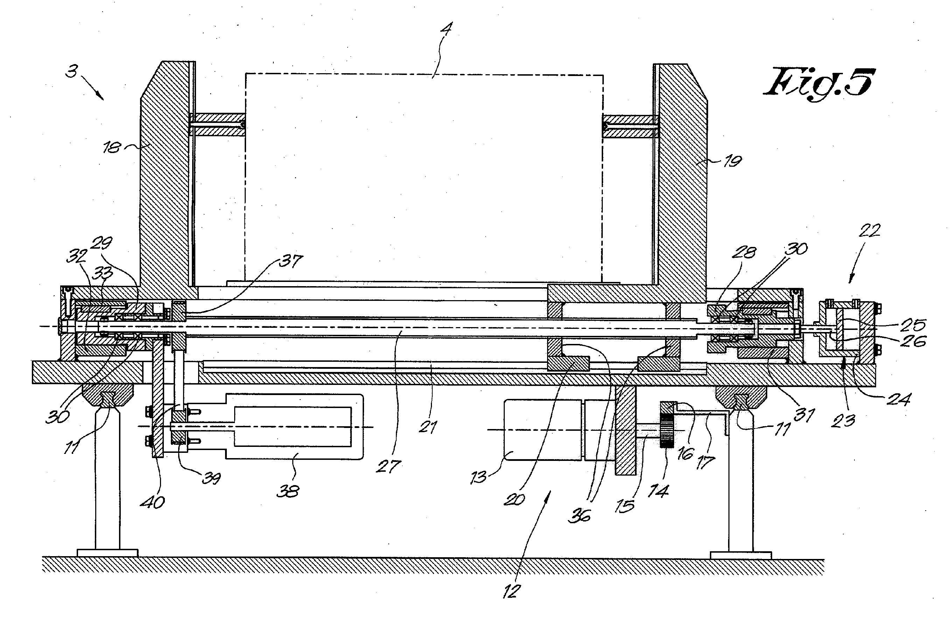

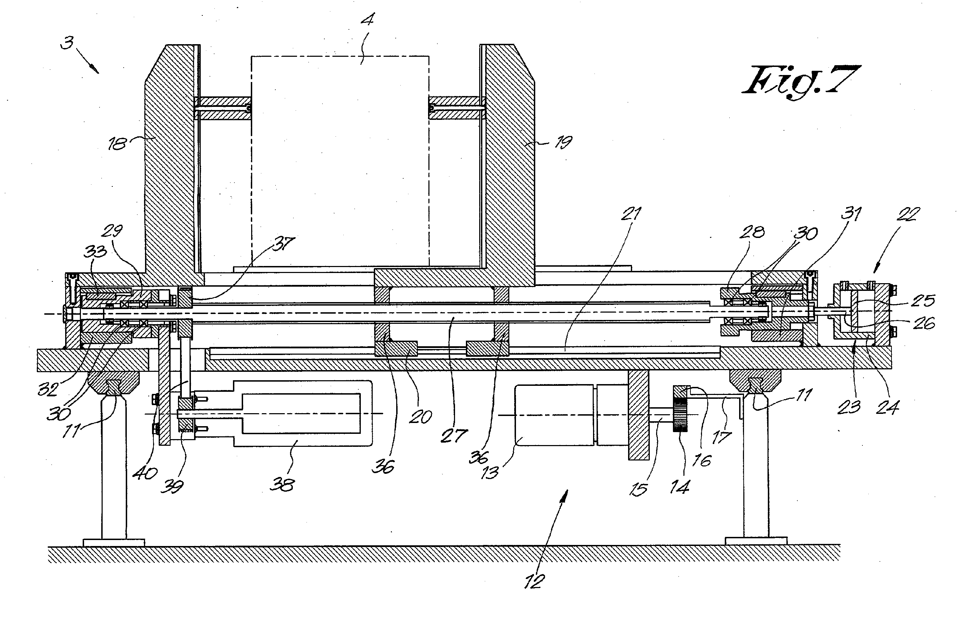

Once the maximum clamping width of the clamp 3 is set up, the part 4 is clamped between the claws 18-19, by actuating the pressure means 22, i.e. the cylinder 23, in order to push the pressure rod 27 and the slide 20 connected to this rod 27 towards the part 4 as is represented in figure 5 and in figure 7 for two parts with different sizes of its cross-section.

It is clear that during the machining of the part 4 one or more clamps 3 can be moved from one spot to another in order to make access for the working tool.

After machining of the part 4, all the clamps 3 can be moved simultaneously with the same speed and in the same direction in order to move the part 4 to the empty preparation area 10, in order to remove the finished part 4.

Simultaneously, another part 4 which has been prepared in the preparation area 9, can be moved into the working area 7 to be machined next.

Another advantage of the invention is that part 4 in the working area 7 can be divided into several smaller parts by sawing or any other operation and that these smaller parts can subsequently be moved apart in the longitudinal direction for machining the extremities of these smaller parts, which is not possible with existing devices for machining parts.

The invention is by no means limited to the above-described embodiment represented in the accompanying drawings; on the contrary, such an improved device for machining construction parts can be made in all sorts of variants while still remaining within the scope of the following claims.

## Claims

1. Improved device for machining parts which is essentially composed of a machining apparatus (5) with at least one working tool positioned alongside a longitudinal frame (2), one or more clamps (3) with at least two claws (18-19) for clamping the parts (4) to be machined, which clamps (3) are provided in a slidable manner on guides (11) mounted on said frame (2) following the longitudinal direction of this frame (2), whereby at least one claw (19) of each clamp (3) is provided on a slide (20) which is mounted on guides (31) extending in a direction transversal to the longitudinal direction of the frame (2) and whereby this slide (20) is provided with pressure means (22) to clamp the concerned parts (4), **characterised in that** one or more clamps (3) are provided with their own driving means (12) to move said clamp (3) in the longitudinal direction of the frame (2).

2. Improved device according to claim 1, **characterised in that** the driving means (12) are formed by a motor (13) which is fitted onto said clamp (3) and by a gear (14) which is fixed on the shaft (15) of the motor (13) and which meshes with a fixed gear lath (16) which extends in the longitudinal direction of the frame (2).

3. Improved device according to claim 1 or 2, **characterised in that** it is provided with a central control unit for control of the driving means (12) of said clamps (3).

4. Improved device according to claim 3, **characterised in that** the control unit is such that it allows for individual control of each of the clamps (3).

5. Improved device according to claim 4 or 5, **characterised in that** the control unit is such that it allows for simultaneous and synchronised control of two or more of said clamps (3).

6. Improved device according to claim 1, **characterised in that** the pressure means (22) are formed by a pressure cylinder (23) and by a pressure rod (27) extending in a parallel way to the above mentioned guides (21) for the slide (20) of the slidable claw (19) of each clamp (3).

7. Improved device according to claim 6, **characterised in that** said pressure rod (27) is supported with each of its extremities in a sleeve (28-29), whereby both sleeves (28-29) are slidably mounted in concentric bushes (31-32) fixed on the clamp (3) and which are provided with means to prevent the sleeves (28-29) from turning in the bushes (31-32).

8. Improved device according to claim 1, **characterised in that** it is provided with means to change the maximum clamping width between the claws (18-19) of the clamps (3).

9. Improved device according to claim 7 and 8, **characterised in that** said means to change the maximum clamping width are formed by the fact that the pressure rod (27) of the clamp (3) is a threaded rod which is mounted rotatably with its extremities in the supporting sleeves (28-29), whereby this threaded rod (27) extends through a threaded hole (36) in the slide (20) of the slidably mounted claw (19) and whereby this threaded rod (27) is provided with driving means.

10. Improved device according to claim 9, **characterised in that** the driving means for the threaded rod (27) are formed by a first pulley (37) fixed on said rod (27); by a motor (38) which is fixed with its housing on one of the supporting sleeves (28-29) and which carries a second pulley (39); and by a belt (40) which is mounted on both pulleys (37-39).

11. Improved device according to claim 9 whereby the driving means for the threaded rod (27) are connected to the central control unit.
